# EUROPEAN PATENT APPLICATION

(11) **EP 1 265 181 A2**
(43) Date of publication of application: **11.12.2002**
(21) Application number: 02253677.5
(22) Date of filing: 24.05.2002
(51) Int. Cl.: G06F 17/60

(54) **System and method for utilizing digital educational material**

(30) Priority: 25.05.2001 JP 2001156478
(71) Applicant: SAGA UNIVERSITY, Saga-City Saga Pref. (JP)
(72) Inventor: Hoyashita, Shigeru, Saga-City, Saga Pref. (JP); Ikegami, Yasuyuki, Saga-City, Saga Pref. (JP); Sumi, Kazuhiro, Saga-City, Saga Pref. (JP)
(74) Representative: Paget, Hugh Charles Edward

(57) **Abstract**

A system is provided for utilizing educational materials. The system has a registration part for prompting to input at least one code (such as a subject code for expressing a subject of an educational material) to store said educational material with said inputted code in an educational material database, a code receiving part for receiving code inputted by a developer or a user, and an educational material transmitting part for reading out an educational material corresponding to said received code from a database in accordance with the received code to transmit the educational material to the developer or the user.

## Description

### Background of the Invention

### Field of the Invention

The present invention relates to a system for utilizing educational materials, and more particularly, relates to a system for searching, distributing and utilizing educational materials. The present invention also relates to a system for collecting fees from persons who utilize, download or reuse educational materials.

### Related Art Statements

According to recent progress of information technologies, educational materials, i.e. various kinds of educational application software such as educational applications using media (e.g. educational document, image, sound, and CD), educational tools for outputting instruction materials (e.g. educational document, image, sound and CD (which are "educational materials" in narrow sense.)), and educational applications using educational instrument and module/data which may be incorporated into these applications, have been developed.

However, these educational application software have been reused by only limited persons and have not been reused in general. For instance, a developer who developed an educational application reuses the application himself or herself to develop new one, or software house's programmers who developed educational applications reuse the applications themselves. Thus, the educational application software could not be reused efficiently and it is inconvenience to reuse educational applications. In order to attain/access a desired educational application, a user has no choice to determine which one is appropriate based on a content of the application (i.e. a target user, a feature, an education level, a subject (course) and an instruction method of the desired application). However there is no appropriate database or searching system which includes the above mentioned data relating to educational applications.

In addition, there is no effective system by means of which a great number of developers or programmers can grow and expand educational material database. Also, new educational applications could not be developed by reusing existing educational applications which have been developed by general public. In other words, the educational applications have not been reused efficiently.

In addition, there is no system for feedbacking evaluation for educational applications developed by general public to respective developers or for accessing freely the evaluation. Also, there is no system by means of which the developers can develop new educational applications with reference to the evaluation.

In addition, there is no system for appropriately collecting fees from persons which reuse the educational materials developed by general public and remitting the fees to developers. Also, a system for utilizing the educational materials developed by general public and utilizing educational materials which have been developed by reusing the educational materials developed by general public has not been developed up to now.

### Summary of the Invention

It is an object of the present invention to provide a system and a method for utilizing educational materials by a large number of people via a network.

In order attain the above mentioned object, a system for utilizing educational materials according to the present invention comprises:
registration means for prompting to input at least one code selected from the group consisting of a subject code for expressing a subject of an educational material, an educational method code for expressing an educational method of said material, a language code for expressing a language used in said material, a data format code for expressing a data format of said material, a target class code for expressing intended users of said material, a developer code for expressing a developer of said material, to store said educational material with said inputted at least one code in an educational material database;
code receiving means for receiving at least one desired code inputted by a developer or a user using a remote terminal or a local terminal via a network; and
educational material transmitting means for reading out an educational material corresponding to said received code from said database in accordance with the received code to transmit the educational material to the remote terminal or the local terminal of the developer or the user.
According to the invention, it is possible to efficiently share and manage the educational materials and information (i.e. the codes) with respect to the educational materials which have been developed by general public. In other word, when an educational material is registered, various kinds of information with respect to the educational material can be standardized by prompting a registrant to input information in a predetermined standard entry format. In addition, a desired educational material can simply and easily be searched from the database in accordance with the codes.

In a preferable embodiment of the system according to the present invention, the system for utilizing educational materials comprises:
evaluation registration means for receiving an evaluation comment and/or an evaluation code inputted by said developer or said user using said remote terminal or said local terminal via the network to store said evaluation comment and/or said evaluation code in the database;
receiving means for receiving a request, inputted by said developer or said user using said remote terminal or said local terminal, for accessing said evaluation comment and/or said evaluation code via the network; and
transmitting means for reading out said evaluation comment and/or said evaluation code from said database upon receiving said request to transmit the readout data to said remote terminal or said local terminal via the network.
According to this embodiment of the present invention, the educational material can be evaluated by third person upon the request of its developer to disclose the evaluation to users or developers. This allows the users to utilize certain degree of guideline for reuse. In other word, the developer may develop a new application based on the evaluation as a guideline. Moreover, this makes it possible to ask a third party body for the evaluation of the educational materials to disclose the evaluation.

In another embodiment of the system according to the present invention, the system for utilizing educational materials comprises:
an authentication database for storing preassigned accounting IDs with passwords of respective developers;
accounting ID receiving means for prompting a developer to input a preassigned his or hers own accounting ID with a password by using the remote terminal or the local terminal to receive them via network prior to transmitting an educational material; and
authentication means for authenticating said developer based on the accounting ID with the password with reference to said authentication database to determine based on the authentication whether or not said educational material can be transmitted, only when said developer is authorized to receive it, said educational material transmitting means transmits the relevant educational material,
the system further comprises:
   accounting means for charging said developer to whom said educational material is transmitted with a predetermined fee which is individually set by each educational material; and
   remitting means for remitting said fee from which a predetermined commission is subtracted to a developer of the transmitted educational material.
According to this embodiment of the present invention, it is possible to appropriately charge the developer who reuses the educational material downloaded from this system, and the educational materials developed by general public could be reused efficiently. A provider of the present system may make a profit by deducting a commission such as cost of a system operation from the collected fees. In addition, a developer of the educational material which is downloaded and reused can participate in profits by remitting a part of the collected fees. Amount of the fee can be individually determined by each of the educational materials based on, for instance quality of the educational material.

In still another embodiment of the system according to the present invention, the system for utilizing educational materials comprises:
an authentication database for storing preassigned accounting IDs with passwords of respective users;
accounting ID receiving means for prompting a user to input a preassigned his or hers own accounting ID with a password by using the remote or local terminal to receive them via network prior to transmitting the material; and
authentication means for authenticating said developer based on the accounting ID with the password with reference to said authentication database to determine based on the authentication whether or not said educational material can be transmitted, said educational material transmitting means transmits the relevant educational material only when said user is authorized to receive it,
the system further comprises:
   accounting means for charging said user to whom said educational material is transmitted with a predetermined fee which is individually set by respective educational materials; and
   remitting means for remitting said fee subtracted by a predetermined commission to a developer who developed the relevant transmitted educational material.
According to this embodiment of the present invention, it is possible to appropriately charge a developer who reuses one or more educational materials downloaded from this system. In this manner, the educational materials developed by general public could be utilized much more effectively.
A provider of the present system may make a profit by deducting commission fees such as cost of a system operation from the collected fees. In addition, a developer of an educational material which is downloaded and reused can participate in profits by remitting a part of a collected fee. Amounts of fees of respective educational materials can be individually determined in accordance with various factors such as quality of educational materials. In this connection, in order to treat developers favorably to facilitate further development, fees which are collected from the developers may be set to lower amounts than those for ordinary users.

In still another embodiment of the system according to the present invention, the system for utilizing educational materials comprises:
digital watermarking means for embedding a digital watermark including at least said developer code into an educational material by using a predetermined watermarking technique prior to transmission of the educational material,
extracting means for extracting a digital watermark from a first educational material by using the predetermined watermarking technique to determine whether or not one or more educational materials are reused in said first educational material by determining whether or not the extracted digital watermark includes one or more developer codes;
accounting means for, if said one or more educational materials are reused in said first educational material, charging the developer who developed said first educational material with predetermined fees in accordance with said extracted developer code, said fees being individually set for respective reused educational materials; and
remitting means for remitting an amount of said fees subtracted by a predetermined commission to one or more developers who developed said one or more reused educational materials;
wherein when the first educational material includes one or more educational materials which are watermarked, said registration means determines whether or not said first educational material is watermarked prior to storing it in the database.
According to this embodiment of the present invention, when existing educational materials are reused (i.e. downloaded) such as incorporating them into a newly developed first educational material, it is possible to appropriately charge the developer who reuses the one or more existing educational materials downloaded from this system. A provider of the present system may make a profit by deducting commission fees (such as cost of a system operation) from the collected fees. In addition, a developer of the educational material which is downloaded and reused can participate in profits by remitting a part of the collected fees. Amount of the fee can be individually determined by each of the material based on such as quality of the material. In addition, any type of the watermarking technique can be utilized in the present system. Moreover, various identification techniques as well as the watermarking may be used in the present system. For example, a method for collecting a fee by detecting any type of identification including said developer ID (which is added in a field such as a reserved area in a program module of the educational material and indicates that the module is provided by the present system) as an accounting technique may be utilized. In this instance, in order to enhance security of the present system, the identification can be encrypted.
By way of easily explanation the aspect of the present invention has been mainly described as systems i.e. devices, however it is understood that the present invention may be realized as methods corresponding to the systems, programs embodying the methods as well as a storage media storing the programs.

For example, according to another aspect of the present invention, a method for utilizing educational materials, comprises the steps of:
prompting to input at least one code selected from the group consisting of a subject code for expressing a subject of an educational material, an educational method code for expressing an educational method of said educational material, a language code for expressing a language used in said educational material, a data format code for expressing a data format of said educational material, a target class code for expressing intended users of said educational material, a developer code for expressing a developer of said educational material, to store said educational material with said inputted at least one code in an educational material database;
receiving at least one desired code inputted by a developer or a user using a remote terminal or a local terminal via a network; and
reading out at least one educational material corresponding to the said received at least one code from said database in accordance with said received code to transmit the material to the remote terminal or the local terminal.

In an embodiment of the method according to the present invention, the method for utilizing educational materials, wherein the method further comprises the steps of:
receiving an evaluation comment and/or an evaluation code inputted by said developer or said user using said remote terminal or said local terminal via the network to store said evaluation comment and/or said evaluation code in the database;
receiving a request, inputted by said developer or said user using said remote terminal or said local terminal, for accessing said evaluation comment and/or said evaluation code via the network; and
reading out said evaluation comment and/or said evaluation code from said database upon receiving said request to transmit the readout data to said remote terminal or said local terminal via the network.

In another embodiment of the method according to the present invention, the method for utilizing educational materials, wherein the method further comprises the steps of;
storing a preassigned accounting ID with a password by each of developers in an authentication database;
prompting the developer to input preassigned his or her own accounting ID with the password by using the remote terminal or the local terminal to receive them via network prior to transmitting an educational material;
authenticating said developer based on the accounting ID with the password with reference to said authentication database to determine whether said educational material can be transmitted or not;
transmitting the educational material to the remote terminal or the local terminal only when said developer is authorized to receive the educational material;
charging said developer who received said educational material with a predetermined fee which is individually set for respective educational materials; and
remitting an amount of said fee subtracted by a predetermined commission to a developer who developed the relevant transmitted educational material.

In still another embodiment of the method according to the present invention, the method for utilizing educational materials, the method further comprises the steps of:
storing preassigned accounting IDs with password of respective users in an authentication database;
prompting the user to input preassigned his or her own accounting ID with the password by using the remote terminal or the local terminal to receive them via network prior to transmitting an educational material;
authenticating said developer based on the accounting ID with the password with reference to said authentication database to determine whether or not said educational material may be transmitted;
transmitting the educational material to the remote terminal or the local terminal only when said user is authorized to receive the educational material;
charging said user who received said educational material with a predetermined fee which is individually set for respective educational materials; and
remitting an amount of said fee subtracted by a predetermined commission to a developer who developed the transmitted educational material.

In still another embodiment of the method according to the present invention, the method for utilizing educational materials, wherein the method further comprises the steps of:
embedding a digital watermark which including at least said developer code into said material to be sent by using a predetermined watermarking technique prior to transmitting the said material;
when a first educational material includes another one or more educational materials which are watermarked, determining whether or not said first material is watermarked prior to storing it in the database;
extracting, if said first material is watermarked, the digital watermark from said first material by using the predetermined watermarking technique to determine whether or not the another one or more educational materials are reused in said first material by determining whether or not the extracted digital watermark includes the developer code;
if said another one or more educational materials are reused in said first material, charging the developer who developed said first material with a predetermined fee which is individually set by each educational material which is reused based on the said extracted developer code; and
remitting an amount of said fee subtracted by a predetermined commission to a developer who developed said another one or more educational materials.

Under the favor of defining the educational application program file in terms of a file type (i.e. an extension), it makes it possible to easily distinguish the educational materials or raw materials for education, which are compliant with a standard recommended by the present system, from other data or files for education. In order to use or reuse the educational materials around the world, it is conceivable that the present system may link a machine translation system to become available plentiful educational materials in a foreign country. So as to utilize the latest source (i.e. the educational materials) according to the locality, it is preferable that the database of the present system can easily be updated. It is also preferable that the system according to the present system is linked to developers and users via variety of networks (such as LAN, WAN, and Internet). The present system is appropriately secured. It is preferable that among others the accounting information (such as IDs and passwords) and the evaluation of the educational materials are tightly protected. For instance, when the account ID or the passwords is sent/transmitted, they are preferably encoded with an SSL technique. The system according to the present invention is consisting of one or more servers. In this case, the servers are not necessarily installed in one location. In regards to the accounting, for example, the each user can be distinguished by the assigned IDs according to need, so that the fee which is charged by the present system may be varied based on a frequency of use by each user. The present system collects the fee by persons who use or reuse the educational material, the system then subtracts a predetermined commission from the fee. The remainder of the subtraction is returned to the developer who developed the used or reused educational material. Of course, in the case of the system does not take a commission on the use, full amount of the fee may be returned to the developer. With respect to the rule of the accounting, the rule is defined individually by each educational material or each developer in advance.

The system according to the present system is capable of determining whether or not the educational material with its codes to be registered in the system complies with a predetermined standard or criteria. The educational materials are automatically or manually evaluated on request basis. If the material fails to meet the standard, the system will notifies the registrant its reason or suggestions for improvements, if required. The standard or the criteria may include educational standards which are defined by government agencies or educational establishments such as a "official teaching guidelines". A system administrator of the present system can entrusts the evaluations of the educational materials to a third party body according to need. The system according to the present system allows the users to select one from evaluation methods prepared by the system. In order to easily select an excellent educational material by the users, the evaluation of the materials can be rated and disclosed. Information which makes for user's convenience such as frequency in usage, new arrivals, off-specification materials can also be disclosed. When the educational material includes a statistical data to be renewed, the system may automatically replace old one in the material with a latest data. The present system allows the educational materials to be automatically adapted with a region or a season. The present system can automatically check educational materials to be registered. If an educational material complies with the standard or the criteria, the compliant material may be automatically accepted in the present system. If the material does not fit the specification, the present system may automatically reject to accept the material and notify advice about it. The present system also has an advanced search function. As mentioned above, the present system may also be connected to a machine translation system having capable of multilingual translation. Under the favor of the connecting the translation system, even if the educational materials are written in only one language, the materials may be automatically translated into other languages and utilized in worldwide. In the system according to the present system, the system may derive an educational material which ask for users to answer (such as an exercise book or examination) from other registered educational materials.
The present system may automatically grade the examination submitted by the user of the materials. The present system can be accessed via various network such as cellular communication network by a PDA, a hand-held computer etc.
The present system may automatically search for a material requested by a user and produce a new educational material which adapts with user's request from other existed materials according to need.

The educational material utilizing system also aims to let general public provide the educational materials and to refine the registered educational materials. The present system also aims to provide so-called "a core center" in which the educational material are freely traded or utilized. By means of the present system, new educational materials can be developed by a great number of people utilizing the download educational materials and the database stored the materials can be utilized by a large number of people, so that users can easily utilize the materials which use information technology. An evaluation standard or an evaluation level is set and then the educational materials are evaluated on request for evaluation, the users may easily access desired educational materials by means of referencing the disclosed evaluation.

The present invention is applied to a software utilizing system as well as the educational material utilizing system. For example, a system for utilizing, distributing and developing various software other than the educational materials according to the present invention can be realized.
It is assumed that the educational materials is replaced by software games, a system for utilizing software games comprises:
registration means for prompting to input at least one code selected from the group consisting of a keyword code for expressing one or more features of the game, an age group code for expressing intended users of the game, a category code for expressing a category such as a RPG, a shooting game of the said game, a language code for expressing a language used in said game, a data format code for expressing a data format of said game, a developer code for expressing a developer of said game, to store said game with said inputted at least one code in an games database;
code receiving means for receiving one or more desired code inputted by a developer or a user using a remote terminal or a local terminal via a network; and
game transmitting means for reading out an game corresponding to the said received code from said database based on the said received code to transmit the game to the remote or local terminal.
Thus it should be understood that the system according to the present invention can be applied in distribution, utilization, evaluation, and accounting of various software.

### Brief Description of the Drawings

Fig. 1 is a block diagram illustrating a concept of the system for utilizing educational materials according to the invention;
Fig. 2 is a block diagram showing the basic arrangement of a computer system which allows to operate the system for utilizing educational materials according to the invention;
Fig.3 is a block diagram depicting a basic configuration of the system for utilizing educational materials according to the invention; and
Fig. 4 is a flowchart showing an algorithm of a program carrying out an embodiment of the system for utilizing educational materials according to the invention.

### Detailed Description of the Preferred Embodiments

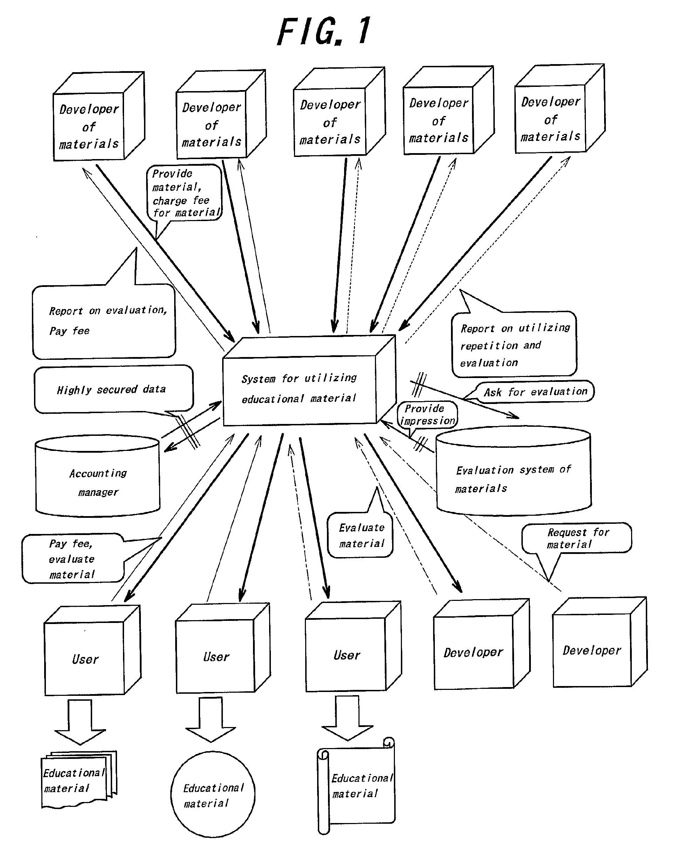

Several preferred embodiment of the systems for utilizing educational materials according to the present invention will be described with reference to the accompanying drawings. Fig. 1 is a block diagram illustrating a concept of the system for utilizing educational materials according to the invention. As shown in Fig. 1, a basic concept of the present system is that the system allows a great number of developers to provide educational materials and allows third party i.e. users to utilize the educational materials. In addition, the present system can evaluate the educational materials and discloses the evaluation of them to users for providing useful information. Additionally, the present system comprises a function to return a profit to developers of the educational materials.

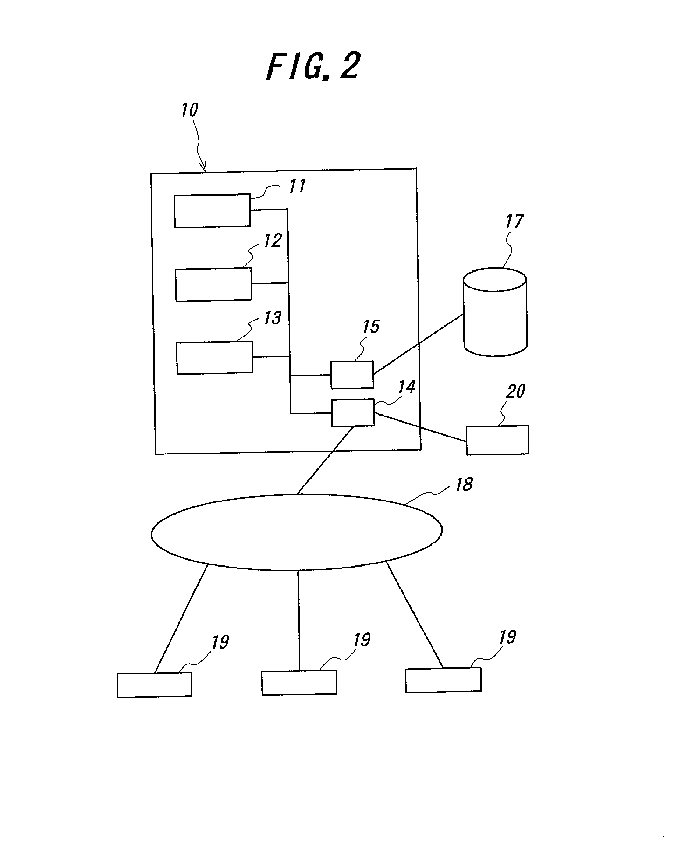

Fig. 2 is a block diagram showing the basic arrangement of a computer system allows to operate the system for utilizing educational materials according to the present invention. As illustrated in the Fig. 2, a computer system 10 comprises a processor 11, a RAM 12, a ROM 13, an external interface 14, an auxiliary storage controller 15, and a system bus 16. Each components of the computer system 10 are coupled with each other via the system bus 16. The computer system 10 is connected to an auxiliary storage 17 such as a hard disc drive via the auxiliary storage controller 15. Educational materials, codes related to respective educational materials and data for authentication are stored in the in the auxiliary storage 17 or ROM 13. A program implementing the system for utilizing educational materials according the present invention is also stored in the auxiliary storage 17 or ROM 13. Before to operate, the program is loaded into the RAM 12 based on instruction by an I/O device such as a keyboard or a mouse, then the program is executed in the processor 11. The computer system 10 is connected via the external interface 14 to a network 18 such as Internet and is further connected through the network 18 via the external interface 14 to remote terminals 19. The computer system 10 is connected via the external interface 14 to a local terminal 20. The remote and local terminal 19 and 20 can be used for searching or utilizing (i.e. downloading) the educational materials by the users and for registration, searching and utilizing the educational materials by developers.

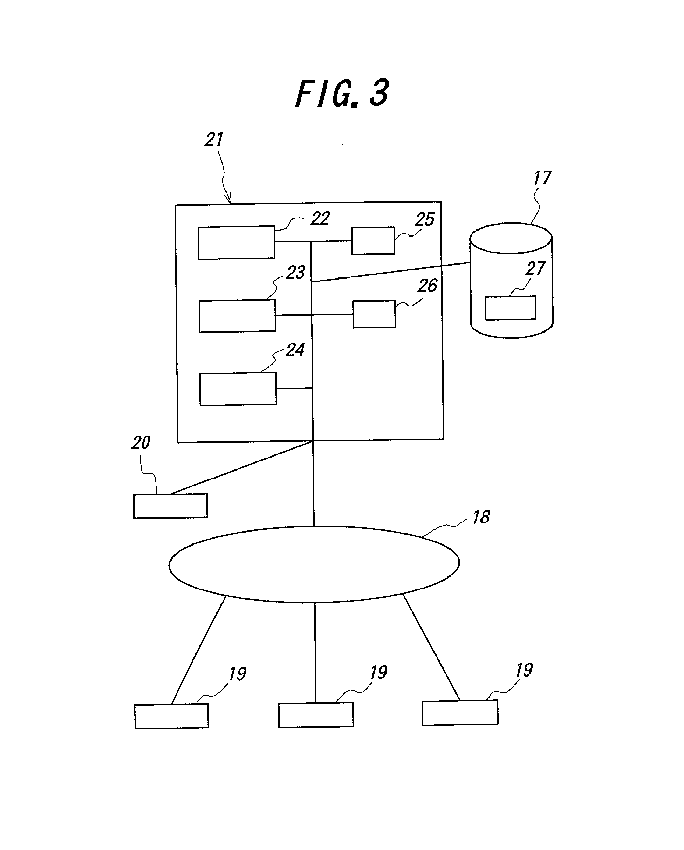

Fig.3 is a block diagram depicting a basic configuration of the system for utilizing educational materials according to the invention. As illustrated in Fig. 3, the system 21 for utilizing educational materials comprises a means 22 for registering an educational material, a means 23 for receiving a code, a means 24 for transmitting the educational material, a means 25 for registering an evaluation for an educational material and a means 26 for transmitting the evaluation. Each of these means is provided by the program implementing the present invention loaded into the RAM 12.

Next, an embodiment of the system for utilizing educational materials according to the present system will be described in detail with reference to Fig. 3.
The means 22 for registering educational materials has a function to prompt developers, who desire to upload educational materials, to input at least one code selected from the group consisting of a keyword code for expressing a feature of an educational material, an education level code for expressing an education level of the educational material, a subject code for expressing a subject of the educational material, an educational method code for expressing an educational method of the educational material, a language code for expressing a language used in the educational material, a data format code for expressing a data format of the educational material, a target class code for expressing intended users of the educational material, a developer code for expressing a developer of the educational material, to store said educational material together with said inputted at least one code in an educational material database 27 built in the storage 17. Preferably, all the above mentioned codes are inputted. In this connection, the educational material is uploaded into the present system form a remote terminal 19 of a user via the network 18 to store it within the educational material database 27. Alternatively, the educational material may be directly loaded from removable storage media such as a magnetic tape or a flexible disc into the database 27.
When an object of an educational material is child development (i.e. intellectual training) for a young child, "Child Development" as the key word is inputted. In addition, the code is standardized into a plurality of levels, For instance, the code may be classified into three educational levels, i.e. high, medium and low. The present system provides a screen interface for prompting to input the codes in accordance with a defined format to the local or remote terminal of developer, the screen image is then displayed in the terminal. The developer appropriately inputs the codes using the I/O device.

Next, the means 23 for receiving a code has a function to receive one or more desired codes inputted by a developer or a user, who want to utilize an educational material, using the remote terminal 19 or the local terminal 20 via the network 18.
For instance, when a user desires to get an educational material which is developed for high educational level and for a young child, the user should select "High" in an educational level code area and "Yong Child" in an educational level code area on the screen display, respectively. The means 23 for receiving a code then receives the codes via the network 18.

Next, the means 24 for transmitting the educational material has a function to read out an educational material corresponding to the received code from said database in accordance with the received code to transmit the readout data to the remote or local terminal 19, 20 of the developer or the user via the network 1.8
Alternatively, the means 24 may transmit a list of educational materials (which includes titles and summaries of the educational materials) corresponding to the received code the remote or local terminal 19, 20 of the developer or the user via the network 18. In this case, the user or the developer selects one or more desired educational materials from the list and downloads them.

The means 25 for registering an evaluation of the educational material has a function to receive an evaluation comment and/or an evaluation code inputted by said developer or said user using said remote or local terminal 19, 20 via the network 18 to store (i.e. register) said evaluation comment and/or said evaluation code in the educational material database 27.

The means 26 for transmitting the evaluation has a function to receive a request for accessing of the stored evaluation comment and/or an evaluation code sent from the remote or local terminal 19, 20 via the network 18, to read out the evaluation comment and/or an evaluation code from the database 27, and to transmit the read out data to the remote or local terminal 19, 20 via the network 18.

Next, an accounting means will be described in detail.
Firstly, in advance, preassigned accounting IDs are stored with passwords by respective users within an authentication database (not shown). Accounting ID receiving means (not shown) has a function to prompt the developer to input preassigned his or her own accounting ID with a password by using the remote or local terminal 19, 20 to receive them via the network 18 prior to transmitting the educational material. An authentication means (not shown) has a function to authenticate said developer based on the accounting ID with the password with reference to said authentication database to determine whether or not said educational material may be transmitted based on the authentication. Furthermore, an educational material transmitting means (not shown) has a function to transmit, only when said developer is authorized to receive the educational material, the educational material to the remote or local terminal 19, 20 of the developer.
An accounting means (not shown) has a function to charge said developer who received said material with a predetermined fee. Fees have been set for respective educational materials. A remitting means (not shown) has a function to remit said fee subtracted by a predetermined commission to a developer who developed the transmitted educational material. In practice, the remitting is realized in such a way that the present system transmits data including an account number of the developer and an amount of remittance to a banking system which has a banking account of the said developer, the banking system then makes remittance.

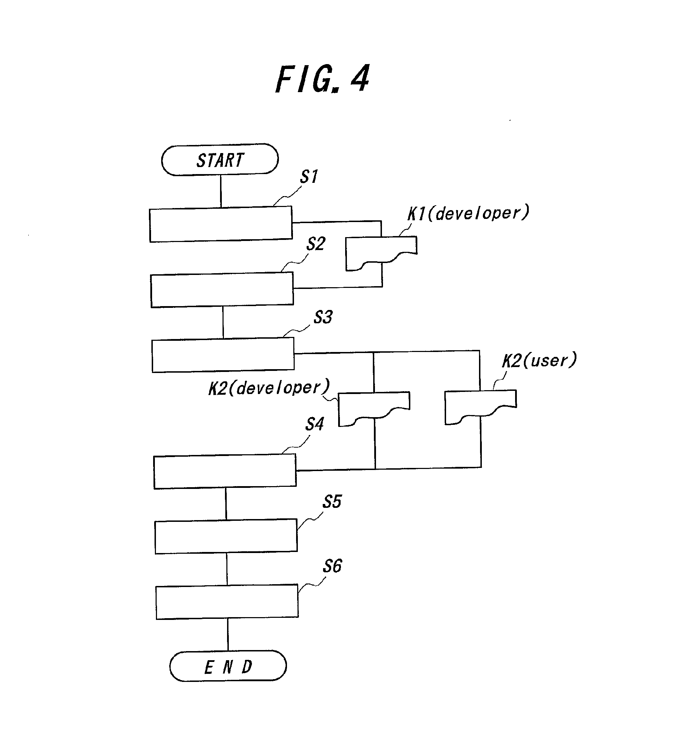

Fig. 4 is a flowchart showing an algorithm of a program for carrying out an embodiment of the system for utilizing educational materials according to the invention.
In a step S1, the system according to the present invention transmits a request for prompting an developer to input code data, said developer wants to register an educational material in the database. Said code data includes at least one code selected from the group consisting of a subject code for expressing a subject of said educational material to be registered, an educational method code for expressing an educational method of said educational material, a language code for expressing a language used in said educational material, a data format code for expressing a data format of said educational material, a target class code for expressing intended users of said educational material, and a developer code for expressing a developer of said educational material, to a terminal.
In a step K1, the developer's terminal receives the request, and a prompt screen for inputting codes is then displayed on the terminal. The developer appropriately inputs one or more codes related to the educational material and transmits the educational material with said codes inputted by himself or herself to the present system via the network using the terminal.

In a step S2, the present system transmits a request for prompting a user or a developer to input one or more desired codes to a terminal of the user or the developer.
In a step K2, the developer or the user transmits one or more desired codes inputted by the developer or the user to the present system via the network.
In a step S4, the present system receives the codes from the developer or the user via the network.
In a step S5, the present system reads out one or more educational materials corresponding to the said codes from an educational material database in accordance with said codes.
In a step S6, the present system then transmits the readout data i.e. the one or more educational materials to the terminal of the user or the developer via the network.

While the present invention has been described with respect to some embodiments and drawings, it is to be understood that the present invention is not limited to the above-described embodiments, and modifications and drawings, various changes and modifications may be made therein, and it is intended to cover in the appended claims all such modifications as fall within the true spirit and scope of the invention.

### Industrial Applicability

As mentioned above, the present invention is applied to a software utilizing system as well as the educational material utilizing system. Thus, the method and system of the invention are widely applicable to systems for utilizing, distributing and developing various software other than the educational materials.

## Claims

1. A system for utilizing educational materials comprising:
registration means for prompting to input at least one code selected from the group consisting of a subject code for expressing a subject of an educational material, an educational method code for expressing an educational method of said material, a language code for expressing a language used in said material, a data format code for expressing a data format of said material, a target class code for expressing intended users of said material, and a developer code for expressing a developer of said material, to store said educational material with said inputted at least one code in an educational materials database;
code receiving means for receiving at least one desired code inputted by a developer or a user using a remote terminal or a local terminal via a network; and
educational material transmitting means for reading out an educational material corresponding to said received code from said database in accordance with the received code to transmit the educational material to the remote terminal or the local terminal.

2. The system according to claim 1, wherein the system further comprises:
evaluation registration means for receiving an evaluation comment and/or an evaluation code inputted by said developer or said user using said remote terminal or said local terminal via the network to store said evaluation comment and/or said evaluation code in the database;
receiving means for receiving a request, inputted by said developer or said user using said remote terminal or said local terminal, for accessing said evaluation comment and/or said evaluation code via the network; and
transmitting means for reading out said said evaluation comment and/or said evaluation code from said database upon receiving said request to transmit the readout data to said remote terminal or said local terminal via the network.

3. The system according to claim 1 or 2, wherein the system further comprises:
an authentication database for storing preassigned accounting IDs with a passwords of respective developers;
accounting ID receiving means for prompting a developer to input a preassigned his or hers own accounting ID with a password by using the remote terminal or the local terminal to receive them via network prior to transmitting an educational material; and
authentication means for authenticating said developer based on the accounting ID with the password with reference to said authentication database to determine based on the authentication whether or not said educational material can be transmitted,
only when said developer is authorized to receive it, said educational material transmitting means transmits the relevant educational material,
the system further comprises:
accounting means for charging said developer to whom said educational material is transimitted with a predetermined fee which is individually set by each educational material; and
remitting means for remitting said fee from which a predetermined commission is subtracted to a developer of the transmitted educational material.

4. The system according to claim 1 or 2, wherein the system further comprises:
an authentication database for storing preassigned accounting IDs with a passwords of respective users;
accounting ID receiving means for prompting a user to input a preassigned his or hers own accounting ID with a password by using the remote terminal or the local terminal to receive them via network prior to transmitting the material; and
authentication means for authenticating said developer based on the accounting ID with the password with reference to said authentication database to determine based on the authentication whether or not said educational material can be transmitted,
said educational material transmitting means transmits the relevant educational material only when said user is authorized to receive it,
the system further comprises:
accounting means for charging said user to whom said educational material is transmitted with a predetermined fee which is individually set by respective educational materials; and
remitting means for remitting said fee subtracted by a predetermined commission from to a developer who developed the relevant transmitted educational material.

5. The system according to claim 1 or 2, wherein the system further comprises
digital watermarking means for embedding a digital watermark including at least said developer code into an educational material by using a predetermined watermarking technique prior to transmission of the educational material,
extracting means for extracting a digital watermark from a first educational material by using the predetermined watermarking technique to determine whether or not one or more educational materials are reused in said first educational material by determining whether or not the extracted digital watermark includes one or more developer codes;
accounting means for, if said one or more educational materials are reused in said first educational material, charging the developer who developed said first educational material with predetermined fees in accordance with said extracted developer code, said fees being individually set for respective reused educational materials; and
remitting means for remitting an amount of said fees subtracted by a predetermined commission to one or more developers who developed said one or more reused educational materials;
wherein when the first educational material includes one or more educational materials which are watermarked, said registration means determines whether or not said first educational material is watermarked prior to storing it in the database.

6. A method for utilizing educational materials, comprising the steps of:
prompting to input at least one code selected from the group consisting of a subject code for expressing a subject of an educational material, an educational method code for expressing an educational method of said material, a language code for expressing a language used in said material, a data format code for expressing a data format of said material, a target class code for expressing intended users of said material, and a developer code for expressing a developer of said material, to store said educational material with said inputted at least one code in an educational materials database;
receiving at least one desired code inputted by a developer or a user using a remote terminal or a local terminal via a network; and
reading out an educational material corresponding to said received code from said database in accordance with the received code to transmit the material to the remote terminal or the local terminal.

7. The method according to claim 6, wherein the method further comprising the steps of:
receiving an evaluation comment and/or an evaluation code inputted by said developer or said user using said remote terminal or said local terminal via the network to store said evaluation comment and/or said evaluation code in the database;
receiving a request, inputted by said developer or said user using said remote terminal or said local terminal, for accessing said evaluation comment and/or said evaluation code via the network; and
reading out said evaluation comment and/or said evaluation code from said database upon receiving said request to transmit the readout data to said remote terminal or said local terminal via the network.

8. The method according to claim 1 or 2, wherein the method further comprising the steps of;
storing preassigned accounting IDs with passwords of respective developers in an authentication database;
prompting a developer to input a preassigned his or hers own accounting ID with a password by using the remote terminal or the local terminal to receive them via network prior to transmitting an educational material;
authenticating said developer based on the accounting ID with the password with reference to said authentication database to determine based on the authentication whether or not said educational material can be transmitted;
transmitting the relevant educational material to the remote terminal or the local terminal only when said developer is authorized to receive it;
charging said developer to whom said educational material is transmitted with a predetermined fee which is individually set by each educational material; and
remitting said fee from which a predetermined commission is subtracted to a developer of the transmitted educational material.

9. The method according to claim 6 or 7, the method further comprising the steps of:
storing preassigned accounting IDs with passwords of respective users in an authentication database;
prompting a user to input a preassigned his or hers own accounting ID with a password by using the remote terminal or the local terminal to receive them via network prior to transmitting the material;
authenticating said developer based on the accounting ID with the password with reference to said authentication database to determine based on the authentication whether or not said educational material can be transmitted;
transmitting the relevant educational material to the remote terminal or the local terminal only when said user is authorized to receive it;
charging said user to whom said educational material is transmitted with a predetermined fee which is individually set by respective educational materials; and
remitting said fee subtracted by a predetermined commission to a developer who developed the relevant transmitted educational material.

10. The method according to claim 6 or 7, wherein the method further comprising the steps of:
embedding a digital watermark which including at least said developer code into an educational material by using a predetermined watermarking technique prior to transmission of the educational material;
extracting a digital watermark from a first educational material by using the predetermined watermarking technique to determine whether or not one or more educational materials are reused in said first educational material by determining whether or not the extracted digital watermark includes one ore more developer codes;
when said one or more educational materials are reused in said first educational material, charging the developer who developed said first educational material with predetermined fees in accordance with said extracted developer code, said fees being individually set for respective reused educational materials; and
remitting an amount of said fees subtracted by a predetermined commission to one or more developers who developed said one or more reused educational materials;
wherein when the first educational material includes one or more educational materials which are watermarked, said prompting and storing step includes determining whether or not said first educational material is watermarked prior to storing it in the database.
